# FASCICULE DE BREVET EUROPEEN

(11) **EP 3 743 382 B1**
(45) Date de publication et mention de la délivrance du brevet: **27.10.2021**
(21) Numéro de dépôt: 19705210.3
(22) Date de dépôt: 11.01.2019
(51) Int. Cl.: C01G 43/01, C01G 56/00, G21C 3/62

(54) **PROC& XC9;D& XC9; DE PR& XC9;PARATION D'UNE POUDRE A BASE D'OXYDE(S) COMPRENANT DE L'URANIUM ET DU PLUTONIUM METTANT EN & X152;UVRE UN M& XC9;LANGE DE LIGANDS ORGANIQUES SP& XC9;CIFIQUES ET UTILISATION DE CETTE POUDRE POUR LA FABRICATION D'UN COMBUSTIBLE A BASE D'URANIUM ET DE PLUTONIUM**
VERFAHREN ZUR HERSTELLUNG EINES PULVERS AUS OXID(EN) MIT URAN UND PLUTONIUM UNTER VERWENDUNG EINER MISCHUNG AUS SPEZIFISCHEN ORGANISCHEN LIGANDEN UND VERWENDUNG DIESES PULVERS ZUR HERSTELLUNG EINES BRENNSTOFFS AUS URAN UND PLUTONIUM
METHOD FOR PREPARING A POWDER MADE FROM OXIDE(S) COMPRISING URANIUM AND PLUTONIUM USING A MIXTURE OF SPECIFIC ORGANIC LIGANDS AND USE OF THIS POWDER FOR PRODUCING A FUEL MADE FROM URANIUM AND PLUTONIUM

(30) Priorité: 26.01.2018 FR 1850639
(43) Date de publication de la demande: 02.12.2020
(73) Titulaire: COMMISSARIAT À L'ÉNERGIE ATOMIQUE ET AUX ÉNERGIES ALTERNATIVES, 75015 Paris (FR)
(72) Inventeur: ARAB-CHAPELET, Bénédicte, 30200 BAGNOLS SUR CEZE (FR); LOUBERT, Gaël, 59188 MILLONFOSSE (FR); DELAHAYE, Thibaud, 30330 TRESQUES (FR); LOISEAU, Thierry, 59700 MARCQ EN BAROEUL (FR)
(74) Mandataire: Brevalex
(86) Numéro de dépôt international: PCT/FR2019/050060
(87) Numéro de publication internationale: WO 2019/145619

(56) Documents cités:
- YASUJI MORITA ET AL: "A Study on Precipitation Behavior of Plutonium and Other Transuranium Elements with N-Cyclohexyl-2-pyrrolidone for Development of a Simple Reprocessing Process", JOURNAL OF NUCLEAR SCIENCE AND TECHNOLOGY., vol. 44, no. 3, 1 mars 2007 (2007-03-01), pages 354-360, XP055512188, JP ISSN: 0022-3131, DOI: 10.1080/18811248.2007.9711294
- YASUJI MORITA ET AL: "Development of Advanced Reprocessing System Based on Precipitation Method Using Pyrrolidone Derivatives as Precipitants : -Precipitation Behavior of U(VI), Pu(IV), and Pu(VI) by Pyrrolidone Derivatives with Low Hydrophobicity-", JOURNAL OF NUCLEAR SCIENCE AND TECHNOLOGY., vol. 46, no. 12, 1 décembre 2009 (2009-12-01), pages 1129-1136, XP055512565, JP ISSN: 0022-3131, DOI: 10.1080/18811248.2009.9711625
- ARAB-CHAPELET ET AL: "Synthesis of new mixed actinides oxalates as precursors of actinides oxide solid solutions", JOURNAL OF ALLOYS AND COMPOUNDS, ELSEVIER SEQUOIA, LAUSANNE, CH, vol. 444-445, 27 août 2007 (2007-08-27), pages 387-390, XP022215304, ISSN: 0925-8388, DOI: 10.1016/J.JALLCOM.2007.01.033

## Description

### DOMAINE TECHNIQUE

La présente invention a trait à un procédé de préparation d'une poudre d'oxyde(s) comprenant de l'uranium et du plutonium, cette poudre pouvant être utilisée pour la conception de combustibles nucléaires mixtes à base d'uranium et de plutonium et, plus spécifiquement, d'une solution solide d'uranium et de plutonium, ces combustibles étant désignés sous la dénomination de combustibles MOX pouvant répondre à la formule U₁₋ₓPuₓO_{2±δ} avec 0 <x< 1 et 0 ≤ δ ≤ 0,1, x correspondant au rapport molaire (Pu/U+Pu) et δ correspondant à la sur-stœchiométrie en oxygène.

Différentes compositions de combustibles MOX peuvent être visées en fonction du réacteur, dans lequel le combustible est destiné à être utilisé. Ainsi, pour les réacteurs de génération 3 de type REP (REP étant l'acronyme pour désigner les réacteurs à eau pressurisée), les combustibles MOX utilisés comportent, généralement, une teneur en plutonium de 8% atomique pour 92% atomique d'uranium, tandis que, pour les réacteurs de génération 4 de type RNR (RNR étant l'abréviation pour désigner les réacteurs à neutrons rapides), les combustibles MOX utilisés présentent, généralement, une teneur en plutonium bien plus élevée, puisqu'elle peut aller jusqu'aux alentours de 30% atomique. Cette proportion élevée de plutonium place les réacteurs de génération 4 comme une solution industrielle possible pour faire face, dans le futur, aux baisses des ressources naturelles en uranium avec toutefois la nécessité d'augmenter les rendements de production des combustibles MOX présentant de telles teneurs en plutonium.

Actuellement, la préparation de combustibles MOX s'inscrit dans le cadre du recyclage des combustibles usés, ce qui suppose, en premier lieu, une étape de dissolution des combustibles usés dans une solution acide (spécifiquement, une solution d'acide nitrique) suivie d'étapes multiples en amont des étapes de mise en forme et de fabrication des pastilles de combustibles MOX destinées à l'utilisation. Plus spécifiquement, il est procédé, à partir des flux d'uranium et de plutonium issus de la dissolution des combustibles usés, à la préparation de précurseurs solides divisés par la mise en œuvre des opérations principales suivantes :
- une opération de co-précipitation oxalique quantitative de l'uranium et du plutonium présents dans les flux ;
- une opération de séparation liquide/solide, de sorte à isoler le précipité d'oxalate d'uranium et de plutonium ; et
- une opération de traitement thermique pour convertir le précipité en un solide divisé d'oxyde d'uranium et de plutonium, lequel pourra être ensuite utilisé pour la fabrication de pastilles de combustible MOX, comme décrit dans Coordination Chemistry Reviews, 1, 2014, 266-267.

Si ce type de procédé de synthèse de précurseurs est adapté pour la fabrication de combustibles MOX destinés à une utilisation dans des réacteurs de génération 3 du type REP, il devrait nécessiter une amélioration significative afin d'atteindre de meilleurs rendements de fabrication (notamment en termes d'incorporation de plutonium) pour être utilisé pour la fabrication de combustibles MOX destinés à des réacteurs de génération 4.

Par ailleurs, dans l'optique de la conception de combustibles MOX pour des réacteurs de génération 4, les procédés de synthèse devraient répondre, en premier lieu, à une gestion de flux de matière de plus en plus importants, notamment en plutonium. Ainsi, si un parc de réacteurs produisant 400 TWh/an est pris pour exemple, le passage des réacteurs de génération 3 aux réacteurs de génération 4 impliquerait de traiter un flux de plutonium multiplié par un facteur proche de 10. Les procédés développés devront donc être quantitatifs et, si possible, continus et les plus directs possibles avec un nombre d'étapes limité et des cinétiques de réaction courtes.

En second lieu, les procédés de synthèse devraient bénéficier d'une grande flexibilité en termes de chimie appliquée (par exemple, concernant la concentration en actinides, l'isotopie, l'acidité des solutions utilisées, les taux d'impuretés) et de produits finaux obtenus (par exemple, concernant la composition chimique, la granulométrie, la surface spécifique, le taux d'agglomération, la densité, la teneur en impuretés) permettant d'assurer la transition progressive entre les réacteurs de génération 3 et ceux de génération 4 mais aussi d'assurer le lien entre les étapes d'extraction/purification en amont et de mise en forme/densification en aval.

Qui plus est, les procédés, tout en permettant l'obtention des précurseurs les plus adaptés à une mise en forme sous forme de pastilles, devront limiter les étapes de formulation préalables, telles que, par exemple, les étapes de granulation, de désagglomération, d'ajustement de la surface spécifique. Enfin, les procédés devraient amener un facteur de décontamination supplémentaire vis-à-vis d'éventuelles impuretés résiduelles (par exemple, des produits de fission, de lanthanides) présentes dans les solutions d'uranium et de plutonium à l'issue des cycles d'extraction/purification et être, de préférence, non-proliférant avec des flux d'uranium et de plutonium toujours associés.

Comme évoqué ci-dessus, les procédés de préparation de combustibles mixtes actuels sont essentiellement basés sur la chimie des oxalates d'uranium et de plutonium impliquant avant l'étape de conversion thermique des étapes pénalisantes en termes de rendement, telles que l'étape de séparation solide/liquide pour récupérer le précipité d'oxalates voire d'autres étapes, telles qu'une étape d'ajustement redox des actinides en solution (impliquant l'utilisation d'hydrazine pour permettre la réduction de U^{+VI} en U^{+IV} et du Pu^{+IV} en Pu^{+III}) et une étape de concentration.

Aussi, au vu de ce qui existe et en vue d'une transition progressive vers des réacteurs de génération 4, les auteurs de la présente invention se sont fixé pour but de mettre au point un procédé de préparation de précurseurs du type poudre pour la fabrication de combustibles à base d'oxyde(s) d'uranium et de plutonium qui permette de surmonter les inconvénients susmentionnés et plus spécifiquement, qui présentent notamment les caractéristiques suivantes :
- la possibilité d'accéder à un large panel de teneurs en plutonium, ce qui permet d'envisager l'obtention de combustibles utilisables tant pour les réacteurs de génération 3 que les réacteurs de génération 4 ;
- des étapes non pénalisantes pour le rendement d'obtention des précurseurs du type poudre ;
- un nombre d'étapes plus limité que les procédés mis en œuvre classiquement et ne nécessitant pas spécifiquement d'étape d'ajustement redox ;
- la possibilité de permettre un multirecyclage du plutonium par exemple, celui issu de combustibles usés de type MOX, du fait de la grande flexibilité du procédé de par ses étapes mises en jeu ;
- un procédé robuste présentant une grande flexibilité en termes d'entrants mais également de produits finaux obtenus.

### EXPOSÉ DE L'INVENTION

Ainsi, l'invention a trait à un procédé de préparation d'une poudre à base d'oxyde(s) comprenant de l'uranium et du plutonium comprenant les étapes suivantes :
a) une étape de précipitation d'une solution comprenant de l'uranium à son degré d'oxydation VI et du plutonium à son degré d'oxydation IV par mise en contact de ladite solution avec un mélange comprenant de l'acide oxalique et de la N-cyclohexylpyrrolidone ;
b) une étape d'isolement du précipité obtenu en a) ;
c) une étape d'obtention de ladite poudre par traitement thermique du précipité.

Le procédé de l'invention comprend, en premier lieu, une étape de précipitation d'une solution comprenant de l'uranium à son degré d'oxydation VI et du plutonium à son degré d'oxydation IV par mise en contact de ladite solution avec un mélange comprenant de l'acide oxalique et de la N-cyclohexylpyrrolidone.

Plus précisément, la solution comprenant de l'uranium à son degré d'oxydation VI et du plutonium à son degré d'oxydation IV peut être une solution aqueuse comprenant des ions nitrates et, encore plus spécifiquement, une solution comprenant du U^{+VI} sous forme de nitrate d'uranyle UO₂(NO₃)₂ et du Pu^{+IV} sous forme de nitrate de plutonium Pu(NO₃)₄. En outre, la solution peut être une solution nitrique (c'est-à-dire une solution aqueuse d'acide nitrique).

Cette solution nitrique peut être issue directement du retraitement d'un combustible usé comprenant les opérations générales suivantes :
- une opération de dissolution du combustible usé dans de l'acide nitrique ;
- une opération d'extraction liquide/liquide pour isoler la solution nitrique comprenant l'uranium et le plutonium prête à la mise en œuvre de l'étape a).

De ce fait, le procédé de l'invention permet d'entretenir un lien direct avec les opérations de recyclage d'un combustible usé.

En outre, selon la nature de la poudre souhaitée à l'issue du procédé, la solution nitrique issue directement du retraitement d'un combustible usé peut être soumise, avant utilisation dans le cadre de l'étape a), à un ajustement de sa composition chimique, par exemple, concernant le rapport U/Pu et/ou l'isotopie de la composition.

Dans la solution, la concentration des actinides U^{+VI} et Pu^{+IV} peut varier dans de larges limites mais plus généralement va de 10⁻³ M à 1 M et, de préférence, de 0,1 à 0,3 M. Quant au rapport molaire [Pu/(U+Pu)], il peut varier de 10 à 90% et, plus généralement, de 40 à 60%.

En vue de la précipitation de l'uranium VI et du plutonium IV, la solution est mise en contact avec un mélange comprenant de l'acide oxalique et du N-cyclohexylpyrrolidone, ces deux composés assurant le rôle de ligands organiques permettant la formation de complexes de coordination avec l'uranium VI et le plutonium IV, ce mélange étant avantageusement utilisé en excès. Par excès, on entend la quantité de ligand (à savoir, de N-cyclohexylpyrrolidone et d'acide oxalique) supplémentaire ajouté par rapport à la quantité stœchiométrique nécessaire pour former, par précipitation, les composés UO₂(NCP)₂(NO₃)₂ (NCP désignant la N-cyclohexylpyrrolidone) dans le cas de la N-cyclohexylpyrrolidone et Pu(C₂O₄)₂^{∗}6H₂O pour l'acide oxalique. L'utilisation de l'acide oxalique et de la N-cyclohexylpyrrolidone permet d'assurer la précipitation quantitative (soit un rendement supérieur à 99%) de l'uranium VI et du plutonium IV. L'excès d'acide oxalique et de N-cyclohexylpyrrolidone calculé dans le milieu final après précipitation peut varier de 0,01 à 1M et, plus spécifiquement, entre 0,05 et 0,5 M.

Pour plus de précision, il est à noter que le N-cyclohexylpyrrolidone répond à la formule suivante :

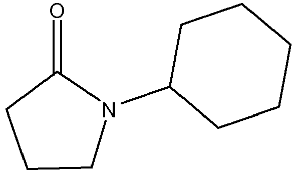

L'étape de précipitation est avantageusement quantitative, c'est-à-dire que le rendement de précipitation de l'uranium et du plutonium est supérieur à 95%.

Cette étape de précipitation peut être réalisée à une température comprise entre 10 et 60°C et, plus spécifiquement à température ambiante (soit une température de 25°C). L'étape de précipitation peut être mise en œuvre à un pH inférieur à 0,5 et l'acidité de la solution à l'issue de l'étape a) est généralement supérieure à 1 M.

Cette étape de précipitation peut être qualifiée de « syn-précipitation », ce qui correspond à une précipitation simultanée, à partir d'une même phase liquide, d'une phase solide comprenant deux composés distincts (par exemple, Pu(C₂O₄)₂^{∗}6H₂O et UO₂(NCP)₂(NO₃)₂). Le solide précipité est alors un mélange de deux composés et son diagramme de diffraction des rayons X par la poudre est une combinaison des diagrammes des deux composés.

A l'issue de l'étape a), il résulte ainsi une suspension comprenant deux phases : une phase liquide constituant un surnageant et une phase solide constituée d'un précipité d'uranium VI et de plutonium IV, lequel précipité est séparé de la phase liquide lors de l'étape d'isolement b).

Cette étape d'isolement peut être mise en œuvre par l'utilisation de tous types d'équipement permettant une séparation liquide/solide adaptés aux propriétés de filtrabilité et d'essorage de la suspension précitée, une technique adaptée étant la filtration et, plus spécifiquement, la filtration centrifuge. Outre la séparation entre la phase liquide et la phase solide, cette étape peut permettre d'apporter un facteur de décontamination supplémentaire vis-à-vis des impuretés résiduelles éventuellement présentes dans la solution de départ (celle utilisée au début de l'étape a)), ces impuretés pouvant être des produits de fission, des lanthanides issus des cycles d'extraction/purification, lesquelles impuretés sont solubles et ne sont donc pas entraînées dans le précipité.

Le précipité ainsi issu de l'étape b) est ensuite soumis à une étape de traitement thermique du précipité en vue d'obtenir la poudre objet de l'invention.

Cette étape de traitement thermique peut consister en une opération de calcination sous atmosphère oxydante, au cours de laquelle le matériau organique du précipité est dégradé thermiquement (l'opération pouvant être ainsi qualifiée en partie de déliantage) et l'uranium et le plutonium sont convertis en oxyde(s) d'uranium et de plutonium. Les choix de la température et de la durée de calcination sont fixés en fonction de la nature du précipité et des propriétés physico-chimiques souhaitées pour l'oxyde ou le mélange d'oxydes final. La température de calcination est typiquement comprise entre 350 et 1200°C et, plus particulièrement, entre 400 et 850°C. Cette opération conduit principalement au relâchement gazeux de CO₂, CO, H₂O par dégradation thermique du matériau constitutif du précipité mais en fonction de la nature de l'atmosphère de calcination, différents gaz en différentes quantités peuvent être générés. A l'issue de cette opération, il est possible de former sous atmosphère oxydante un mélange d'U₃O₈ et de PuO₂, l'uranium contenu dans l'U₃O₈ pouvant être partiellement substitué par le plutonium. La nature et la proportion des phases formées dépendent de la température de la calcination et de l'atmosphère utilisées. Le produit obtenu à l'issue de cette opération peut être utilisé tel quel pour être mis en forme et fritté pour en faire un combustible nucléaire. Il peut aussi être soumis à des étapes d'ajustement (telles que le broyage, la dilution, le mélangeage, la granulation, l'atomisation) pour être adapté aux procédés de mise en forme ou conduire à un combustible nucléaire présentant certaines propriétés physico-chimiques (par exemple, en termes de composition, d'isotopie).

Par ailleurs, après l'opération de calcination sous atmosphère oxydante mentionnée ci-dessus, il peut être effectué, en outre, une opération de traitement thermique additionnel notamment si l'on souhaite obtenir non plus un mélange d'oxydes mais une poudre consistant en une solution solide d'oxyde d'uranium et de plutonium, par exemple, de formule U₁₋ₓPu_{X}O_{2±δ} (avec 0 <x< 1 et 0 ≤ δ ≤ 0,1). Cette opération peut consister ainsi en une opération de calcination réalisée sous atmosphère réductrice. Les conditions de calcination (cycle thermique / atmosphère(s)) peuvent être définies en fonction de l'obtention ou non de la solution solide mais aussi des caractéristiques finales souhaitées pour la poudre (surface spécifique, granulométrie, densité tassée, etc.). Ce traitement thermique peut être dissocié de l'opération précédente (dite de déliantage) ou être réalisé de manière successive ou en série. Le produit obtenu à l'issue de cette opération peut être utilisé tel quel pour être mis en forme et fritté pour en faire un combustible nucléaire. Il peut aussi être soumis à des étapes d'ajustement (telles que le broyage, la dilution, le mélangeage, la granulation, l'atomisation) pour être adapté aux procédés de mise en forme ou conduire à un combustible nucléaire présentant certaines propriétés physico-chimiques (par exemple, en termes de composition, d'isotopie).

La poudre obtenue à l'issue du procédé de l'invention est une poudre à base d'oxyde(s) d'uranium et de plutonium, ce qui signifie qu'elle peut comporter :
- un mélange d'oxyde d'uranium (par exemple, U₃O₈) et d'oxyde de plutonium (par exemple, PuO₂) ; et/ou
- une solution solide d'oxyde d'uranium et de plutonium de formule U₁₋ₓPu_{X}O_{2±δ} avec 0 <x< 1 et 0 ≤ δ ≤ 0,1.

Il n'est pas exclu que, dans le mélange d'oxyde d'uranium et d'oxyde de plutonium susmentionné, une partie de l'uranium de l'oxyde d'uranium soit substitué par du plutonium et vice versa.

La poudre obtenue conformément au procédé de l'invention est une composition très active, particulièrement adaptée à l'obtention d'un combustible nucléaire, et en particulier, à l'obtention d'un combustible nucléaire du type MOX comme mentionné plus haut.

Ainsi l'invention a trait également à un procédé de préparation d'un combustible compacté, par exemple sous forme de pastilles, comprenant :
e) une étape de mise en œuvre du procédé de préparation tel que défini ci-dessus ;
f) une étape de compactage de ladite poudre obtenue en e).

Ainsi, la poudre obtenue selon le procédé de l'invention peut être utilisée telle quelle mais il n'est pas exclu, qu'avant l'étape de compactage, elle soit amenée à subir des opérations de traitement préalables, telles qu'une opération de broyage, de granulation, d'atomisation voire de dilution (par exemple, en la mélangeant avec une poudre d'oxyde d'uranium).

L'étape de compactage peut être réalisée au moyen d'une presse, qui va appliquer une pression à la composition placée dans un moule, dont la forme correspond à la forme que l'on souhaite affecter au combustible, cette forme étant classiquement celle d'une pastille cylindrique ou annulaire.

D'autres caractéristiques apparaîtront sous un autre angle à la lecture du complément de description qui suit, lequel se rapporte à des exemples de fabrication de poudres conformes à l'invention.

Bien entendu, les exemples qui suivent ne sont donnés qu'à titre d'illustration de l'objet de l'invention et ne constituent, en aucun cas, une limitation de cet objet.

### EXPOSÉ DÉTAILLÉ DE MODES DE RÉALISATION PARTICULIERS

### EXEMPLE 1

Dans cet exemple, il est procédé à la préparation d'une poudre conformément au procédé de l'invention, cette poudre consistant en un mélange d'oxyde d'uranium U₃O₈ et d'oxyde de plutonium PuO₂.

Pour ce faire, il est procédé, dans un premier temps, à la préparation de trois solutions :
a) une première solution acide (8 mL) comprenant de l'uranium VI et du plutonium IV sous forme de nitrates, ces deux éléments étant présents à raison de 50 g/L chacun, cette première solution étant préparée par mélange d'une solution mère de nitrate d'uranyle concentrée (soit une concentration en uranium de 1 mol/L, c'est-à-dire environ 238 g/L) et d'une solution mère de nitrate de plutonium IV avec une concentration en plutonium de 72 g/L;
b) une deuxième solution (8 mL) correspondant à un mélange d'acide oxalique et de N-cyclohexylpyrrolidone tel que la concentration finale en acide oxalique dans cette solution soit de 0,5 M et la concentration finale en N-cyclohexylpyrrolidone soit de 1,4 M. La quantité d'acide oxalique utilisée tient compte de la quantité stœchiométrique nécessaire pour la précipitation du composé Pu(C₂O₄)₂^{∗}6H₂O et de la quantité nécessaire pour assurer l'excès ciblé. Dans le cadre de cet exemple, il est ciblé, après précipitation du composé Pu(C₂O₄)₂^{∗}6H₂O, une concentration en acide oxalique de 0,05 M, ce qui implique que le nombre de moles initialement présent dans la deuxième solution soit égal à deux fois le nombre de moles de plutonium présent dans la première solution (ce qui correspond à la quantité stœchiométrique) et au nombre de moles correspondant à l'excès ciblé (soit 0,05 M) et multiplié par le facteur de dilution de la deuxième solution au cours du mélange. De manière analogue, pour la N-cyclohexylpyrrolidone, la quantité utilisée doit permettre la précipitation du composé UO₂(NCP)₂(NO₃)₂ et de maintenir après précipitation une concentration en NCP égale à 0,5 M ;
c) une troisième solution (4 mL) correspondant à un mélange d'acide oxalique et de N-cyclohexylpyrrolidone tel que la concentration finale en acide oxalique dans cette solution soit de 0,05 M et la concentration finale en N-cyclohexylpyrrolidone soit de 0,5 M, ce qui permet de maintenir constant l'excès d'acide oxalique et l'excès de N-cyclohexylpyrrolidone au cours de la précipitation.

La teneur en acide nitrique dans ces trois solutions est fixée à 3 M par ajout d'acide nitrique (68 %).

La première solution et la deuxième solution sont versées à débit identique dans la troisième solution.

Le mélange résultant est laissé sous agitation pendant au moins 10 minutes à température ambiante (soit 25°C) pour engendrer un mûrissement du précipité.

Ensuite, la phase solide constitutive du précipité est récupérée par filtration sous vide, tandis qu'une partie du filtrat est prélevée pour doser les cations restant en solution. Les rendements de précipitation sont respectivement supérieurs à 99,5% pour le plutonium IV et supérieurs à 99% pour l'uranium VI.

Le composé solide formé est caractérisé par diffraction des rayons X sur poudre et par granulométrie et correspond à un mélange UO₂(NCP)₂(NO₃)₂-Pu(C₂O₄)₂.6H₂O (NCP étant l'abréviation de la N-cyclohexylpyrrolidone). Ce composé est ensuite calciné à 800°C sous air (selon un programme incluant une rampe de 5°C/min puis un palier à 800°C pendant 1 heure) afin de former le mélange d'oxydes U₃O₈/PuO₂. Ce dernier est identifié comme tel par diffraction des rayons X.

### EXEMPLE 2

Dans cet exemple, il est procédé à la préparation d'une poudre conformément au procédé de l'invention, cette poudre consistant en une solution solide de formule U_{0,5}Pu_{0,5}O_{2±δ} (δ correspondant à la sur-stœchiométrie en oxygène).

Pour ce faire, il est procédé, dans un premier temps, à la préparation de deux solutions :
a) une première solution acide (10 mL) comprenant de l'uranium VI et du plutonium IV sous forme de nitrates, ces deux éléments étant présents à raison de 40 g/L chacun, cette première solution étant préparée par mélange d'une solution mère de nitrate d'uranyle concentrée (soit une concentration en uranium de 1 mol/L, c'est-à-dire environ 238 g/L) et d'une solution mère de nitrate de plutonium IV avec une concentration en plutonium de 72 g/L;
b) une deuxième solution (10 mL) correspondant à un mélange d'acide oxalique et de N-cyclohexylpyrrolidone tel que la concentration finale en acide oxalique dans cette solution soit de 0,4 M et la concentration finale en N-cyclohexylpyrrolidone soit de 1,15 M. La quantité d'acide oxalique utilisée tient compte de la quantité stœchiométrique nécessaire pour la précipitation du composé Pu(C₂O₄)₂^{∗}6H₂O et de la quantité nécessaire pour assurer l'excès ciblé. Dans le cadre de cet exemple, il est ciblé, après précipitation du composé Pu(C₂O₄)₂^{∗}6H₂O, une concentration en acide oxalique de 0,3 M, ce qui implique que le nombre de moles initialement présent dans la deuxième solution soit égal à deux fois le nombre de moles de plutonium présent dans la première solution (ce qui correspond à la quantité stœchiométrique) et au nombre de moles correspondant à l'excès ciblé (soit 0,3 M) et multiplié par le facteur de dilution de la deuxième solution au cours du mélange. De manière analogue, pour la N-cyclohexylpyrrolidone, la quantité utilisée doit permettre la précipitation du composé UO₂(NCP)₂(NO₃)₂ et de maintenir après précipitation une concentration en NCP égale à 0,4 M.

L'acidité de cette première solution et de cette deuxième solution est ajustée à 3M d'acide nitrique par ajout d'acide nitrique concentré (68 %).

La deuxième solution est versée dans la première solution.

Le mélange résultant est laissé sous agitation pendant au moins 10 minutes à 50°C pour engendrer un mûrissement du précipité.

Ensuite, la phase solide constitutive du précipité est récupérée par filtration sous vide, tandis qu'une partie du filtrat est prélevée pour doser les cations restant en solution. Les rendements de précipitation sont respectivement supérieurs à 99,5% pour le plutonium IV et supérieurs à 99% pour l'uranium VI.

Le composé solide formé est caractérisé par diffraction des rayons X sur poudre et par granulométrie et correspond à un mélange UO₂(NCP)₂(NO₃)₂-Pu(C₂O₄)₂.6H₂O (NCP étant l'abréviation de la N-cyclohexylpyrrolidone). Ce composé est ensuite calciné, une première fois, à 800°C sous air (selon un programme incluant une rampe de 5°C/min puis un palier à 800°C pendant 1 heure) afin de former le mélange d'oxydes U₃O₈/PuO₂ puis, une deuxième fois, sous atmosphère réductrice (selon un programme incluant une rampe de 10°C/min puis un palier à 800°C pendant 1 heure) pour former la solution solide. Cette dernière est identifiée comme telle par diffraction des rayons X.

### EXEMPLE 3

Dans cet exemple, il est procédé à la préparation d'une poudre conformément au procédé de l'invention, cette poudre consistant en une solution solide de formule U_{0,6}Pu_{0,4}O_{2±δ} (6 correspondant à la sur-stœchiométrie en oxygène).

Pour ce faire, il est procédé, dans un premier temps, à la préparation de deux solutions :
a) une première solution acide (10 mL) comprenant de l'uranium VI et du plutonium IV sous forme de nitrates, ces deux éléments étant présents respectivement à raison de 60 g/L et de 40 g/L, cette première solution étant préparée par mélange d'une solution mère de nitrate d'uranyle concentrée (soit une concentration en uranium de 1 mol/L, c'est-à-dire environ 238 g/L) et d'une solution de nitrate de plutonium IV avec une concentration en plutonium de 72 g/L;
b) une deuxième solution (10 mL) correspondant à un mélange d'acide oxalique et de N-cyclohexylpyrrolidone tel que la concentration finale en acide oxalique dans cette solution soit de 0,4 M et la concentration finale en N-cyclohexylpyrrolidone soit de 1,5 M. La quantité d'acide oxalique utilisée tient compte de la quantité stœchiométrique nécessaire pour la précipitation du composé Pu(C₂O₄)₂^{∗}6H₂O et de la quantité nécessaire pour assurer l'excès ciblé. Dans le cadre de cet exemple, il est ciblé, après précipitation du composé Pu(C₂O₄)₂^{∗}6H₂O, une concentration en acide oxalique de 0,3 M, ce qui implique que le nombre de moles initialement présent dans la deuxième solution soit égal à deux fois le nombre de moles de plutonium présent dans la première solution (ce qui correspond à la quantité stœchiométrique) et au nombre de moles correspondant à l'excès ciblé (soit 0,3 M) et multiplié par le facteur de dilution de la deuxième solution au cours du mélange. De manière analogue, pour la N-cyclohexylpyrrolidone, la quantité utilisée doit permettre la précipitation du composé UO₂(NCP)₂(NO₃)₂ et de maintenir après précipitation une concentration en NCP égale à 0,5 M.

L'acidité de cette première solution et de cette deuxième solution est ajustée à 2,5 M d'acide nitrique par ajout d'acide nitrique concentrée (68%).

La deuxième solution est versée dans la première solution.

Le mélange résultant est laissé sous agitation pendant 30 minutes à température ambiante (25°C) pour engendrer un mûrissement du précipité.

Ensuite, la phase solide constitutive du précipité est récupérée par filtration sous vide, tandis qu'une partie du filtrat est prélevée pour doser les cations restant en solution. Les rendements de précipitation sont respectivement supérieurs à 99,5% pour le plutonium IV et supérieurs à 99% pour l'uranium VI.

Le composé solide formé est caractérisé par diffraction des rayons X sur poudre et par granulométrie et correspond à un mélange UO₂(NCP)₂(NO₃)₂-Pu(C₂O₄)₂.6H₂O (NCP étant l'abréviation de la N-cyclohexylpyrrolidone). Ce composé est ensuite calciné, une première fois, à 800°C sous air (selon un programme incluant une rampe de 5°C/min puis un palier à 800°C pendant 1 heure) afin de former le mélange d'oxydes U₃O₈/PuO₂ puis, une deuxième fois, sous atmosphère réductrice (selon un programme incluant une rampe de 10°C/min puis un palier à 800°C pendant 1 heure) pour former la solution solide. Cette dernière est identifiée comme telle par diffraction des rayons X.

## Revendications

1. Procédé de préparation d'une poudre à base d'oxyde(s) comprenant de l'uranium et du plutonium comprenant les étapes suivantes :
a) une étape de précipitation d'une solution comprenant de l'uranium à son degré d'oxydation VI et du plutonium à son degré d'oxydation IV par mise en contact de ladite solution avec un mélange comprenant de l'acide oxalique et de la N-cyclohexylpyrrolidone ;
b) une étape d'isolement du précipité obtenu en a) ;
c) une étape d'obtention de ladite poudre par traitement thermique du précipité.

2. Procédé selon la revendication 1, dans lequel la solution comprenant de l'uranium à son degré d'oxydation VI et du plutonium à son degré d'oxydation IV est une solution aqueuse comprenant, en outre, des ions nitrates.

3. Procédé selon la revendication 1 ou 2, dans lequel la solution comprenant de l'uranium à son degré d'oxydation VI et du plutonium à son degré d'oxydation IV est un solution comprenant de l'uranium sous forme de nitrate d'uranyle UO₂(NO₃)₂ et du plutonium sous forme de nitrate de plutonium Pu(NO₃)₄.

4. Procédé selon l'une quelconque des revendications précédentes, dans lequel la solution comprenant de l'uranium à son degré d'oxydation VI et du plutonium à son degré d'oxydation IV est une solution nitrique issue directement du retraitement d'un combustible nucléaire usé.

5. Procédé selon l'une quelconque des revendications précédentes, dans lequel le mélange comprenant de l'acide oxalique et de la N-cyclohexylpyrrolidone est utilisé en excès.

6. Procédé selon l'une quelconque des revendications précédentes, dans lequel l'étape de traitement thermique consiste en une opération de calcination sous atmosphère oxydante.

7. Procédé selon la revendication 6, dans lequel l'opération de calcination sous atmosphère oxydante est suivie d'une opération de calcination sous atmosphère réductrice pour obtenir une poudre consistant en une solution solide d'oxyde d'uranium et de plutonium.

8. Procédé selon l'une quelconque des revendications précédentes, dans lequel la poudre obtenue à l'issue du procédé comprend :
- un mélange d'oxyde d'uranium (par exemple, U₃O₈) et d'oxyde de plutonium (par exemple, PuO₂) ; et/ou
- une solution solide d'oxyde d'uranium et de plutonium de formule U₁₋ₓPu_{X}O_{2±δ} avec 0 <x< 1 et 0 ≤ δ ≤ 0,1.

9. Procédé de préparation d'un combustible compacté comprenant :
e) une étape de mise en œuvre du procédé de préparation tel que défini selon l'une quelconque des revendications 1 à 8 ;
f) une étape de compactage de ladite poudre obtenue en e).

## Patentansprüche

1. Verfahren zur Herstellung eines Pulvers auf Basis vom Oxid(en), umfassend Uran und Plutonium, das die folgenden Schritte umfasst:
a) einen Schritt des Fällens einer Lösung, die Uran in seinem Oxidationsgrad VI und Plutonium in seinem Oxidationsgrad IV umfasst, durch Inkontaktbringen der Lösung mit einer Mischung, die Oxalsäure und N-Cyclohexylpyrrolidon umfasst;
b) einen Schritt des Isolierens der in a) erhaltenen Fällung;
c) einen Schritt des Erhaltens des Pulvers durch thermische Behandlung der Fällung.

2. Verfahren nach Anspruch 1, bei dem die Lösung, die Uran in seinem Oxidationsgrad VI und Plutonium in seinem Oxidationsgrad IV umfasst, eine wässrige Lösung ist, die ferner Nitrationen umfasst.

3. Verfahren nach Anspruch 1 oder 2, bei dem die Lösung, die Uran in seinem Oxidationsgrad VI und Plutonium in seinem Oxidationsgrad IV umfasst, eine Lösung ist, die Uran in Form von Uranylnitrat UO₂(NO₃)₂ und Plutonium in Form von Plutoniumnitrat Pu(NO₃)₄ umfasst.

4. Verfahren nach einem der vorhergehenden Ansprüche, bei dem die Lösung, die Uran in seinem Oxidationsgrad VI und Plutonium in seinem Oxidationsgrad IV umfasst, eine salpetrige Lösung ist, die direkt aus der Wiederaufarbeitung eines verbrauchten Kernbrennstoffs stammt.

5. Verfahren nach einem der vorhergehenden Ansprüche, bei dem die Mischung, die Oxalsäure und N-Cyclohexylpyrrolidon umfasst, im Überschuss verwendet wird.

6. Verfahren nach einem der vorhergehenden Ansprüche, bei dem der Schritt der thermischen Behandlung aus einer Kalzinierungsoperation unter oxidierender Atmosphäre besteht.

7. Verfahren nach Anspruch 6, bei dem auf die Kalzinierungsoperation unter oxidierender Atmosphäre eine Kalzinierungsoperation unter reduzierender Atmosphäre folgt, um ein Pulver zu erhalten, das aus einer festen Lösung von Uranoxid und Plutonium besteht.

8. Verfahren nach einem der vorhergehenden Ansprüche, bei dem das am Ende des Verfahrens erhaltene Pulver umfasst:
- eine Mischung von Uranoxid (beispielsweise U₃O₈) und von Plutoniumoxid (beispielsweise PuO₂); und/oder
- eine feste Lösung von Uranoxid und von Plutonium mit der Formel U_{1―x} PuₓO_{2±δ} , wobei 0<x<1 und 0≤ δ ≤0,1 ist.

9. Verfahren zur Herstellung eines kompaktierten Brennstoffs, umfassend:
e) einen Schritt des Durchführens des Herstellungsverfahrens wie in einem der Ansprüche 1 bis 8 definiert;
f) einen Schritt des Kompaktierens des in e) erhaltenen Pulvers.

## Claims

1. A process for preparing a powder based on oxide(s) comprising uranium and plutonium comprising the following steps:
a) a step of precipitating a solution comprising uranium at its degree of oxidation VI and plutonium at its degree of oxidation IV by contacting said solution with a mixture comprising oxalic acid and N-cyclohexylpyrrolidone;
b) a step of isolating the precipitate obtained in a);
c) a step of obtaining said powder by thermally treating the precipitate.

2. The process according to claim 1, wherein the solution comprising uranium at its degree of oxidation VI and plutonium at its degree of oxidation IV is an aqueous solution further comprising nitrate ions.

3. The process according to claim 1 or 2, wherein the solution comprising uranium at its degree of oxidation VI and plutonium at its degree of oxidation IV is a solution comprising uranium as uranyl nitrate UO₂(NO₃)₂ and plutonium as plutonium nitrate Pu(NO₃)₄.

4. The process according to any of the previous claims, wherein the solution comprising uranium at its degree of oxidation VI and plutonium at its degree of oxidation IV is a nitric solution directly coming from retreating a spent nuclear fuel.

5. The process according to any of the previous claims, wherein the mixture comprising oxalic acid and N-cyclohexylpyrrolidone is used in excess.

6. The process according to any of the previous claims, wherein the thermal treatment step consists of a calcination operation under oxidising atmosphere.

7. The process according to claim 6, wherein the calcination operation under oxidising atmosphere is followed by a calcination operation under reducing atmosphere to obtain a powder consisting of a solid solution of plutonium and uranium oxide.

8. The process according to any of the previous claims, wherein the powder obtained at the end of the process comprises:
- a mixture of uranium oxide (for example, U₃O₈) and plutonium oxide (for example, PuO₂); and/or
- a solid solution of plutonium and uranium oxide having the formula U₁₋ₓPuₓO_{2±δ} with 0 < x < 1 and 0≤ δ ≤ 0,1.

9. A process for preparing a compacted fuel comprising:
e) a step of implementing the preparation process as defined according to any of claims 1 to 8;
f) a step of compacting said powder obtained in e).
